# EUROPEAN PATENT APPLICATION

(11) **EP 4 167 079 A1**
(43) Date of publication of application: **19.04.2023**
(21) Application number: 21202933.4
(22) Date of filing: 15.10.2021
(51) Int. Cl.: G06F 8/72, G06F 8/51, G06F 8/36

(54) **METHOD AND SYSTEM FOR GENERATING AND OPTIMIZING ENGINEERING PROGRAMS FOR A TECHNICAL INSTALLATION**

(71) Applicant: Siemens Aktiengesellschaft, 80333 München (DE)
(72) Inventor: N, Madhusudanan, 560036 Bengaluru, Karnataka (IN); ANTONY, Elvis, 560102 Bangalore, Karnataka (IN); BHALLA, Vipul, 284003 Jhansi, Uttar Pradesh (IN); R, Basavaraj, 560037 Bangalore, Karnataka (IN); KAMATH, Yogesh, 560076 Bangalore, Karnataka (IN); R, Aneesh Kumar, 560103 Bangalore, Karnataka (IN); RAI, Himanshu, 560035 Bangalore, Karnataka (IN)
(74) Representative: Isarpatent

(57) **Abstract**

The present invention provides a method and system for generating and optimizing an engineering program with a given specification from another engineering program. The method comprises receiving, by a processing unit (202), a request to generate a first engineering program, with a first specification, from a second engineering program, with a second specification. The method further comprises generating, by the processing unit (202), a first ontology schema comprising information associated with a plurality of data flow and control flow interrelationships between a plurality of code statements in the second engineering program. The further comprises generating, by the processing unit (202), a second ontology schema based on an application of a machine learning algorithm on the first sequential representation of the first ontology schema. The method comprises generating, by the processing unit (202), the first engineering program from the second engineering program, based on an analysis of the second ontology schema.

## Description

The present invention relates to a field of engineering of computer assisted programs, and more particularly relates to a method and system for generating engineering programs with a given specification for a technical installation.

A technical installation such as an industrial plant comprises one or more devices which is controlled by one or more engineering objects. Examples of the one or more engineering objects may include, for example, a programmable logic controller, one or more field devices, or any other automation devices. Examples of the one or more devices includes but is not limited to, control valves, motors, pumps, and actuators. The one or more engineering objects control the one or more devices by execution of an engineering program which may be stored in a memory. The engineering program may include a plurality of machine readable instructions to control the one or more devices.

Typically, the engineering program is manually coded by a code developer, by taking into account of a plurality of parameters associated with the one or more devices, the one or more engineering objects, and the technical installation. Examples of the plurality of parameters includes but is not limited to a processing speed and a memory capability of the one or more engineering objects. Thus, the engineering program is coded such that a memory and processing power requirement of the engineering program is minimal.

Typically, a code developer generates an engineering program in an engineering system configured to handle graphical programming blocks. In order to generate the engineering program for the technical installation, the code developer may have to manually code several graphical programs for each of the one or more engineering objects, based on the plurality of parameter values. In one example, the code developer generates the engineering program by dragging and dropping one or more desired graphical program blocks from an element library, into the engineering system. In another example, the code developer inputs a text based code using an input device such as a computer keyboard. Later, the engineering program is compiled and downloaded onto the one or more engineering objects such as a programmable logic controller (PLC) used for industrial control applications.

Conventional engineering systems employ functions and other resources to provide assistance to the code developer in designing and implementing engineering programs related to the technical installation. However, these conventional engineering systems lack automated engineering methods that automatically generate engineering programs with a given specification for the technical installation. The specification of the engineering program denotes information on one or more constraints which is to be imposed on the engineering program to make the engineering program compatible with the one or more engineering objects. For example, if the engineering program has a gigantic code length which may not fit in a memory space of an engineering object, the engineering program may not be compatible with the engineering object. In such cases, the conventional engineering systems may not notify the code developer that the generated engineering program may be incompatible with the engineering object.

In another example, conventional engineering systems fail to provide automated programming assistance by offering guidance or suggestions to optimize a quality of code that is written by the code developer.

In yet another example, if the code developer has to correct an erroneous code, the code developer may have to analyze the erroneous code line by line, which may consume a huge amount of time. The conventional engineering systems fail to automatically determine one or more errors in the erroneous code. Hence, there are no mechanisms to automate engineering involved in generating engineering programs.

Currently, the engineering programs used in the technical installations comprise a huge number of programming blocks, each of which are enormous in code length. The code developer may find it impossible to manually go through such gigantic blocks of code in order to predict errors, and to optimize the code. Thus, if the code developer is not provided with automated assistance to optimize code, to detect errors in code, and to optimize the engineering program, huge amount of labor and time is wasted. Moreover, the code developer may find it impossible to complete code development in time. Further, the engineering program may have a huge number of programming elements such as variables, classes, and functions which may be defined in a first programming block of the engineering program. The programming elements may be referenced in other programming blocks of the plurality of programming blocks. Thus, any modification of the first programming block which results in modification in definition of the plurality of programming elements, may cause a plurality of errors in the other programming blocks of the plurality of programming blocks. In existing systems, the code developer may have to study a myriad of such definitions and references of the plurality of programming elements, before optimizing the engineering program. It is impossible for the code developer to manually go through the huge number of programming elements as well as identify the interrelationships between the programming elements in the engineering program.

In light of above, there exists a need for an efficient method and system for generating engineering programs with a given specification for a technical installation.

Therefore, it is an object of the present invention to provide a method and system for generating engineering programs with a given specification for a technical installation.

The object of the invention is achieved by a method of generating an engineering program for a technical installation. The method comprises receiving, by a processing unit, a request to generate a first engineering program, with a first specification, from a second engineering program, with a second specification. The request comprises information about the first specification of the first engineering program. The first and second specification comprises information associated with coding languages, coding conventions, software configurations, processing speed restrictions, memory restrictions, and key process indicators associated with the first and second engineering program respectively. The first engineering program is requested to be generated for the technical installation. The second engineering program is stored in a memory storage device of the technical installation.

The technical installation is at least one of an industrial manufacturing plant, an industrial processing plant, or an industrial power plant. The technical installation comprises one or more engineering objects. The one or more engineering objects are devices which function together in the technical installation to achieve one or more objectives of the technical installation. Examples of the one or more engineering objects comprises servers, robots, switches, automation devices, programmable logic controllers (PLC)s, human machine interfaces (HMIs), motors, valves, pumps, actuators, sensors and other industrial equipment(s). The one or more engineering objects comprises a processing unit and a memory. The memory is configured to store one or more engineering programs. In one example, the memory is configured to store the second engineering program. The processing unit of the one or more engineering object is configured to execute the one or more engineering programs to achieve one or more key performance indicators associated with the one or more engineering programs. Examples of the one or more key performance indicators includes a processing speed, a memory requirement, and a process efficiency of the one or more engineering programs, when the one or more engineering programs are executed by the processing unit of the one or more engineering objects. The one or more engineering objects in the technical installation may be connected to each other via one or more physical connections. The one or more physical connections may comprise a physical link (such as wirings or cables). In an alternate embodiment, the connections may also be a virtual link. Further, functioning of the one or more engineering objects may be defined based on a plurality of parameter values. The plurality of parameter values comprises motor configuration parameters, network and communication parameter, valve controls, temperature or pressure values of a sensor, speed, torque and the like.

In the preferred embodiment, the method comprises applying, by the processing unit, a natural language processing algorithm on the second engineering program having the second specification. Examples of the natural language processing algorithm includes but is not limited to Bayesian network algorithms and conditional random field algorithms. The natural language processing algorithm is applied on the second engineering program to extract a plurality of code statements from the second engineering program. The plurality of code statements may be coded in the second engineering program as at least one of a machine readable instruction written in a natural language, a high level programming language, an assembly language, or compiled code. The plurality of code statements comprises a plurality of data items and a plurality of metadata items associated with the second engineering program. The plurality of data items comprises a plurality of variables, a plurality of functions, and a plurality of code statements of the second engineering program. The plurality of metadata items comprises date of creation, author name, domain of an industrial environment in which the second engineering program is deployed. Each of the plurality of data items and the plurality of meta data items of the second engineering program may have data and control flow interrelationships with other data items and meta data items of the second engineering program.

In the preferred embodiment, the method further comprises determining, by the processing unit, the plurality of data items and the plurality of meta data items associated with the second engineering program based on the application of the natural language processing algorithm. Further, the method comprises generating, by the processing unit, a first ontology schema comprising information associated with the plurality of data flow and control flow interrelationships between the plurality of data items and the plurality of metadata items in the second engineering program. The first ontology schema is generated by an analysis of the second engineering program. The first ontology schema further comprises information about relationships between a set of variables corresponding to each programming block in the second engineering program and the plurality of code statements in the second engineering program. The set of variables comprises a plurality of data and pointer variables defined and used in the second engineering program. The first ontology schema is an abstraction of a programming domain that captures semantics of a plurality of programming concepts such as class hierarchy, command lines, data variables, and data structures of the set of programming blocks and one or more relationships amongst a plurality of programming concepts and a plurality of the program attributes like class hierarchy, member variables declared, data types of the variables, memory segments used, system functions and resources used, links to other industrial domain objects, and the like of the second engineering program. In one example, the first ontology schema is realized as a knowledge graph. In such a case, the knowledge graph is obtained by applying a parser on the second engineering program and thereby capturing the plurality of data flow and the plurality of control flow interrelationships between the plurality of data items and the plurality of metadata items.

In the preferred embodiment, the method further comprises generating, by the processing unit, a first sequential representation of the first ontology schema, based on an analysis of the first ontology schema. To generate the first sequential representation, a plurality of nodes of the knowledge graph of the first ontology schema are serialized by the processing unit. In one example, the first sequential representation is a natural language sentence which comprises information represented by the first ontological schema. In another example, the first sequential representation is a Object Notion (JSON) based representation of the first ontological schema.

In a preferred embodiment, the method further comprises training, by the processing unit, a machine learning model to convert the first sequential representation of the first ontological schema to a second sequential representation of a second ontological schema associated with the first engineering program. The second ontology schema comprises information associated with a plurality of data flow and control flow interrelationships of the first engineering program with the first specification. The machine learning model is trained based on an analysis of a plurality of engineering programs. In one example. the plurality of engineering programs may include an unoptimized version and an optimized version of an engineering program. In such a case, the machine learning model is trained on the unoptimized version and the optimized version of the engineering program such that the machine learning model is trained to convert a sequential representation of the unoptimized version of the engineering program to a sequential representation of the optimized version of the engineering program. In another example, the plurality of engineering program comprises at least two engineering programs which are identical in functionality, but differ a coding parameter such as a coding language, a code length, or a coding convention. In such a case, the machine learning model is trained to convert a sequential representation of an engineering program with a first coding parameter to a sequential representation of an engineering program with a second coding parameter.

In the preferred embodiment, the method further comprises converting, by the processing unit, the first sequential representation to the second sequential representation by application of the machine learning algorithm on the first sequential representation. The method further comprises determining, by the processing unit, a plurality of differences between the first sequential representation and the second sequential representation by comparing the first sequential representation and the second sequential representation. The method further comprises generating, by the processing unit, the second ontology schema from the first ontology schema based on the determined plurality of differences between the first sequential representation and the second sequential representation.

The method further comprises mapping, by the processing unit, each of the determined plurality of differences between the first sequential representation and the second sequential representation, to one or more code statements of the plurality of code statements of the second engineering program, based on an analysis of the first ontology schema. The method further comprises generating, by the processing unit, the first engineering program from the second engineering program, by modifying the determined one or more code statements of the second engineering program. The modifications comprise any changes such as addition, deletion, update, replacement or revision of one or more variables, code lines, classes, functions, or comments in the one or more code statement. Since the second engineering program is modified based on an analysis of the first ontology schema, the one or more code statements are modified based on the relationships between the set of variables corresponding to the second engineering program. I

Advantageously, code development time and labor required to generate the first engineering program for the technical installation is significantly reduced. In one example, the first engineering program is an optimized version of the second engineering program. Advantageously, time and labor required to optimize the second engineering program for the technical installation is significantly reduced.

The object of the invention is achieved by a method of optimizing an engineering program for the technical installation. The method comprises receiving, by a processing unit, a request to optimize an engineering program. The request comprises information about one or more parameters of the engineering program, which is to be optimized. The one or more parameters comprises a coding language, a coding convention, a software configuration, a code size, a memory requirement, a processing power requirement, and a key performance indicator associated with the engineering program. In one example, the received request is to optimize the code length of the engineering program. The engineering program is requested to be optimized for the technical installation. The engineering program is stored in a memory storage device of the technical installation. The engineering program comprises a plurality of code statements which are coded as at least one of a machine readable instruction written in a natural language, a high level programming language, an assembly language, or compiled code.

In the preferred embodiment, the method comprises applying, by the processing unit, a natural language processing algorithm on the unoptimized engineering program. Examples of the natural language processing algorithm includes but is not limited to Bayesian network algorithms and conditional random field algorithms.

In the preferred embodiment, the method further comprises determining, by the processing unit, a plurality of data items and a plurality of meta data items associated with the engineering program based on the application of the natural language processing algorithm. The plurality of data items comprises a plurality of variables, a plurality of functions, and a plurality of code statements of the engineering program. The plurality of metadata items comprises date of creation, author name, domain of an industrial environment in which the second engineering program is deployed. Each of the plurality of data items and the plurality of meta data items of the second engineering program may have data and control flow interrelationships with other data items and meta data items of the engineering program.

In the preferred embodiment, the method comprises generating, by the processing unit, an ontology schema comprising information associated with a plurality of data flow and control flow interrelationships between a plurality of code statements in the engineering program. The ontology schema is generated by an analysis of the engineering program. The method further comprises generating, by the processing unit, a sequential representation of the ontology schema, based on an analysis of the ontology schema.

The method further comprises converting, by the processing unit, the sequential representation to the optimized sequential representation by application of a machine learning algorithm on the sequential representation. The machine learning algorithm is trained to convert the sequential representation to an optimized sequential representation of an optimized ontology schema. The machine learning algorithm is trained based on an analysis of a plurality of unoptimized engineering programs and a plurality of optimized engineering programs. The optimized ontology schema comprises information associated with a plurality of data and control flow interrelationships associated with the plurality of data items and metadata items associated with an optimized version of the engineering program.

The method further comprises determining, by the processing unit, a plurality of differences between the sequential representation and the optimized sequential representation by comparing the sequential representation with the optimized sequential representation. The method further comprises generating, by the processing unit, the optimized ontology schema from the ontology schema based on the determined plurality of differences between the sequential representation and the optimized sequential representation.

The method further comprises mapping, by the processing unit, each of the determined plurality of differences to one or more code statements of the engineering program, based on an analysis of the ontology schema. The method further comprises generating, by the processing unit, the optimized engineering program from the engineering program, by modifying the determined one or more code statements of the engineering program. The modifications comprise any changes such as addition, deletion, update, replacement or revision of one or more variables, code lines, classes, functions, or comments in the one or more code statement. Since the engineering program is modified based on an analysis of the ontology schema, the one or more code statements are modified based on the relationships between the set of variables corresponding to the engineering program. In other words, the engineering program is optimized based on the ontology schema, to generate the optimized engineering program for the technical installation. Advantageously, code development time and labor required to optimize the engineering program to be compatible with the technical installation is significantly reduced.

In the preferred embodiment, the method further comprises receiving, by the processing unit, a request to modify a code statement of the plurality of code statements of the engineering program. The request is at least one of a text-based user instruction, a voice-based user instruction, and a gesture-based user instruction. In one example, a user, such as a code developer may modify the code statement by entering one or more programming lines into the code statement of the engineering program, by use of an data input device such as a keyboard. The method further comprises modifying, by the processing unit, the code statement of the engineering program, based on the received request. The method further comprises training, by the processing unit, the machine learning algorithm based on the modification of the code statement of the plurality of code statements of the engineering programs.

In the preferred embodiment, the method further comprises generating, by the processing unit, a simulation instance for the optimized engineering program. In one example, the simulation instance is a digital twin of one or more engineering objects in the technical installation. The method further comprises simulating, by the processing unit, execution of the generated engineering program by the one or more engineering objects of the technical installation in a simulation environment by executing the engineering program on the generated simulation instance. The method further comprises determining, by the processing unit that the generated engineering program is valid, based on a result of the simulated execution of the generated second set of programming blocks. Further, the method comprises deploying, by the processing unit, the generated engineering program in real-time onto the one or more engineering objects, based on a determination that the generated engineering program is valid. Advantageously, the generated engineering program is only deployed onto the one or more engineering objects after the determination that the generated engineering program is valid. Further, the method comprises displaying, by the processing unit, the generated engineering program on a display device. Advantageously, the user is enabled to document the generated engineering program.

The object of the present invention is also achieved by an engineering system for generating and optimizing engineering program for a technical installation. The engineering system comprises one or more processing unit(s) and a memory coupled to the processing unit. The memory comprises an automation module stored in the form of machine-readable instructions executable by the processing unit. The automation module is configured for performing the method as described above.

The object of the present invention is also achieved by an industrial environment. The industrial environment comprising an engineering system, a technical installation comprising one or more physical components and one or more client devices communicatively coupled to the engineering system and the technical installation. The engineering system is configured to perform the above described method steps.

The object of the present invention is also achieved by a computer-program product having machine-readable instructions stored therein, that when executed by one or more processing unit(s), cause the one or more processing unit(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of generating and optimizing engineering programs for a technical installation, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented;
- FIG 4A-B: is a process flowchart illustrating an exemplary method of generating engineering programs in an engineering system, according to an embodiment of the present invention;
- FIG 5A-C: is a process flowchart illustrating an exemplary method of generating object behavior model, according to an embodiment of the present invention; and

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

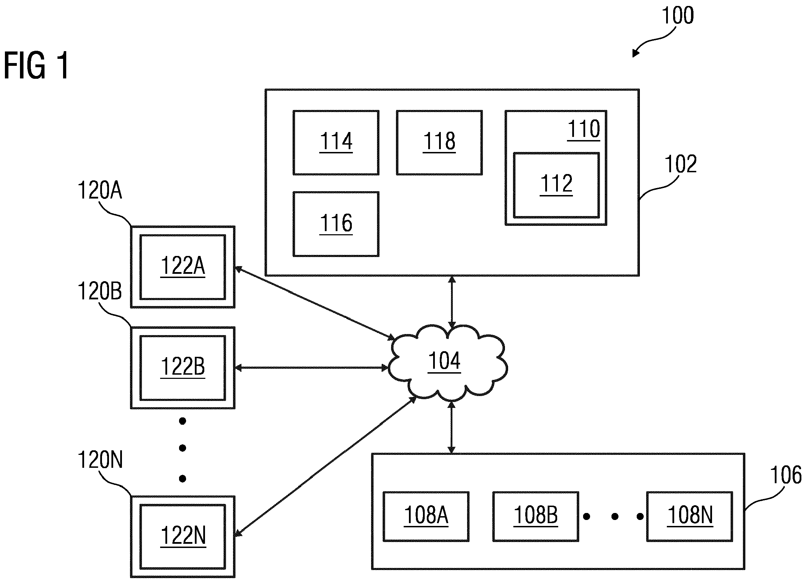

FIG 1 is a block diagram of an industrial environment 100 capable of generating engineering programs, according to an embodiment of the present invention. In FIG 1, the industrial environment 100 includes an engineering system 102, a technical installation 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to the technical installation 106 via the network 104 (such as Local Area Network (LAN), Wide Area Network (WAN), Wi-Fi, Internet, any short range or wide range communication). The engineering system 102 is also connected to the one or more client devices 120A-N via the network 104.

The engineering system 102 is connected to one or more engineering objects 108A-N in the technical installation 106 via the network 104. The one or more engineering objects 108A-N may include servers, robots, switches, automation devices, programmable logic controllers (PLC)s, human machine interfaces (HMIs), motors, valves, pumps, actuators, sensors and other industrial equipment(s). The one or more engineering objects 108A-N may be connected to each other or several other components (not shown in FIG 1) via physical connections. The physical connections may be through wiring between the one or more engineering objects 108A-N. Alternatively, the one or more engineering objects 108A-N may also be connected via non-physical connections (such as Internet of Things (IOT)) and 5G networks. Although, FIG 1 illustrates the engineering system 102 connected to one technical installation 106, one skilled in the art can envision that the engineering system 102 can be connected to several technical installations 106 located at different geographical locations via the network 104.

The one or more client devices 120A-N may be a desktop computer, laptop computer, tablet, smart phone and the like. Each of the one or more client devices 120A-N is provided with an engineering tool 122A-N for generating and/or editing engineering programs respectively. The one or more client devices 120A-N can access the engineering system 102 for automatically generating engineering programs. The one or more client devices 120A-N can access cloud applications (such as providing performance visualization of the one or more engineering objects 108A-N via a web browser). Throughout the specification, the terms "client device" and "user device" are used interchangeably.

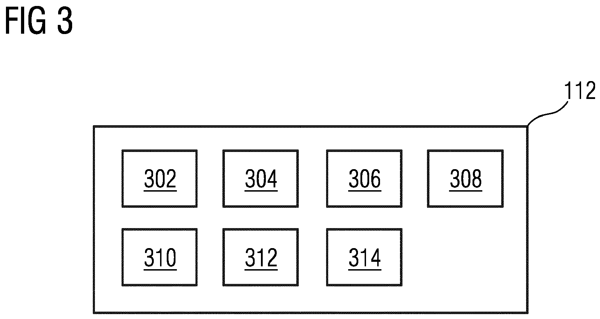

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing a technical installation 106 comprising one or more engineering objects 108A-N. The engineering system 102 may comprise a platform 110(such as a cloud computing platform), an automation module 112, a server 114 including hardware resources and an operating system (OS), a network interface 116 and a database 118. The network interface 116 enables communication between the engineering system 102, the technical installation 106, and the one or more client device(s) 120A-N. The interface (such as cloud interface) (not shown in FIG 1) may allow the engineers at the one or more client device (s) 120A-N to access engineering project files stored at the engineering system 102 and perform one or more actions on the engineering project files as same instance. The server 114 may include one or more servers on which the OS is installed. The servers 114 may comprise one or more processing units, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the one or more client devices 120A-N to generate engineering programs. The platform 110 may further comprise an automation module 112 configured for generating engineering programs. Details of the automation module 112 is explained in FIG. 3.

The database 118 stores the information relating to the technical installation 106 and the client device(s) 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the one or more engineering objects 108A-N, test results, simulation results, status messages, one or more simulation instances, graphical programs, program logics, program logic patterns, engineering objects 108A-N and engineering object properties, one or more engineering object blocks, relationship information between the engineering objects, requirements, program update messages and the like.

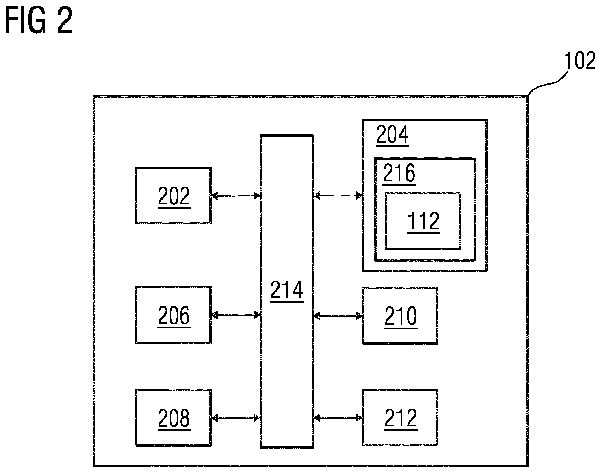

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The accessible memory 204 may be non-transitory volatile memory and non-volatile memory. The accessible memory 204 may be coupled for communication with the processing unit 202, such as being a computer-readable storage medium. The processing unit 202 may execute machine-readable instructions and/or source code stored in the accessible memory 204. A variety of machine-readable instructions may be stored in and accessed from the accessible memory 204. The accessible memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the accessible memory 204 includes an integrated development environment (IDE) 216. The IDE 216 includes an automation module 112 stored in the form of machine-readable instructions on any of the above-mentioned storage media and may be in communication with and executed by the processing unit 202. When executed by the processing unit 202, the automation module 112 causes the processing unit 202 to generate engineering programs in the engineering system 102. In an embodiment, the automation module 112 causes the processing unit 202 to receive a request to generate a first engineering program, with a first specification from a second engineering program, with a second specification. The request comprises information about the first specification of the first engineering program. The first and second specification comprises information associated with coding languages, coding conventions, software configurations, processing speed restrictions, memory restrictions, and key process indicators associated with the first and second engineering program respectively. The first engineering program is requested to be generated for the technical installation 106. The second engineering program is stored in a memory storage device of the technical installation 106.

In one example, the accessible memory 204 is configured to store the second engineering program. The automation module 112 further causes the processing unit 202 to apply a natural language processing algorithm on the second engineering program having the second specification. Examples of the natural language processing algorithm includes but is not limited to Bayesian network algorithms and conditional random field algorithms. The natural language processing algorithm is applied on the second engineering program to extract a plurality of code statements from the second engineering program. The plurality of code statements may be coded in the second engineering program as at least one of a machine readable instruction written in a natural language, a high level programming language, an assembly language, or compiled code. The plurality of code statements comprises a plurality of data items and a plurality of metadata items associated with the second engineering program. The plurality of data items comprises a plurality of variables, a plurality of functions, and a plurality of code statements of the second engineering program. The plurality of metadata items comprises date of creation, author name, domain of an industrial environment 100 in which the second engineering program is deployed. Each of the plurality of data items and the plurality of meta data items of the second engineering program may have data and control flow interrelationships with other data items and meta data items of the second engineering program.

The automation module 112 further causes the processing unit 202 to determine the plurality of data items and the plurality of meta data items associated with the second engineering program based on the application of the natural language processing algorithm. The automation module 112 further causes the processing unit 202 to generate a first ontology schema comprising information associated with the plurality of data flow and control flow interrelationships between the plurality of data items and the plurality of metadata items in the second engineering program. The first ontology schema is generated by an analysis of the second engineering program. The first ontology schema further comprises information about relationships between a set of variables corresponding to each programming block in the second engineering program and the plurality of code statements in the second engineering program. The set of variables comprises a plurality of data and pointer variables defined and used in the second engineering program. The first ontology schema is an abstraction of a programming domain that captures semantics of a plurality of programming concepts such as class hierarchy, command lines, data variables, and data structures of the set of programming blocks and one or more relationships amongst a plurality of programming concepts and a plurality of the program attributes like class hierarchy, member variables declared, data types of the variables, memory segments used, system functions and resources used, links to other industrial domain objects, and the like of the second engineering program. In one example, the first ontology schema is realized as a knowledge graph. In such a case, the knowledge graph is obtained by applying a parser on the second engineering program and thereby capturing the plurality of data flow and the plurality of control flow interrelationships between the plurality of data items and the plurality of metadata items.

The automation module 112 further causes the processing unit 202 to generate a first sequential representation of the first ontology schema, based on an analysis of the first ontology schema. To generate the first sequential representation, a plurality of nodes of the knowledge graph of the first ontology schema are serialized by the processing unit 202. In one example, the first sequential representation is a natural language sentence which comprises information represented by the first ontological schema. In another example, the first sequential representation is a Javascript Object Notion (JSON) based representation of the first ontological schema.

The automation module 112 further causes the processing unit 202 to train a machine learning model to convert the first sequential representation of the first ontological schema to a second sequential representation of a second ontological schema associated with the first engineering program. The second ontology schema comprises information associated with a plurality of data flow and control flow interrelationships of the first engineering program with the first specification. The machine learning model is trained based on an analysis of a plurality of engineering programs. In one example, the plurality of engineering programs may include an unoptimized version and an optimized version of an engineering program. In such a case, the machine learning model is trained on the unoptimized version and the optimized version of the engineering program such that the machine learning model is trained to convert a sequential representation of the unoptimized version of the engineering program to a sequential representation of the optimized version of the engineering program. In another example, the plurality of engineering program comprises at least two engineering programs which are identical in functionality, but differ a coding parameter such as a coding language, a code length, or a coding convention. In such a case, the machine learning model is trained to convert a sequential representation of an engineering program with a first coding parameter to a sequential representation of an engineering program with a second coding parameter.

The automation module 112 further causes the processing unit 202 to convert the first sequential representation to the second sequential representation by application of the machine learning algorithm on the first sequential representation. The automation module 112 further causes the processing unit 202 to determine a plurality of differences between the first sequential representation and the second sequential representation by comparing the first sequential representation and the second sequential representation. The automation module 112 further causes the processing unit 202 to generate the second ontology schema from the first ontology schema based on the determined plurality of differences between the first sequential representation and the second sequential representation.

The automation module 112 further causes the processing unit 202 to map each of the determined plurality of differences between the first sequential representation and the second sequential representation, to one or more code statements of the plurality of code statements of the second engineering program, based on an analysis of the first ontology schema. The automation module 112 further causes the processing unit 202 to generate the first engineering program from the second engineering program, by modifying the determined one or more code statements of the second engineering program. The modifications comprise any changes such as addition, deletion, update, replacement or revision of one or more variables, code lines, classes, functions, or comments in the one or more code statement. Since the second engineering program is modified based on an analysis of the first ontology schema, the one or more code statements are modified based on the relationships between the set of variables corresponding to the second engineering program. I

Advantageously, code development time and labor required to generate the first engineering program for the technical installation 106 is significantly reduced. In one example, the first engineering program is an optimized version of the second engineering program. Advantageously, time and labor required to optimize the second engineering program for the technical installation 106 is significantly reduced.

In one example, the automation module 112 further causes the processing unit 202 to receive a request to optimize an engineering program. The request comprises information about one or more parameters of the engineering program, which is to be optimized. The one or more parameters comprises a coding language, a coding convention, a software configuration, a code size, a memory requirement, a processing power requirement, and a key performance indicator associated with the engineering program. In one example, the received request is to optimize the code length of the engineering program. The engineering program is requested to be optimized for the technical installation 106. The engineering program is stored in a memory storage device of the technical installation 106. The engineering program comprises a plurality of code statements which are coded as at least one of a machine readable instruction written in a natural language, a high level programming language, an assembly language, or compiled code. The automation module 112 further causes the processing unit 202 to apply a natural language processing algorithm on the unoptimized engineering program. Examples of the natural language processing algorithm includes but is not limited to Bayesian network algorithms and conditional random field algorithms.

The automation module 112 further causes the processing unit 202 to determine a plurality of data items and a plurality of meta data items associated with the engineering program based on the application of the natural language processing algorithm. The plurality of data items comprises a plurality of variables, a plurality of functions, and a plurality of code statements of the engineering program. The plurality of metadata items comprises date of creation, author name, domain of the industrial environment 100 in which the second engineering program is deployed. Each of the plurality of data items and the plurality of meta data items of the second engineering program may have data and control flow interrelationships with other data items and meta data items of the engineering program.

The automation module 112 further causes the processing unit 202 to generate an ontology schema comprising information associated with a plurality of data flow and control flow interrelationships between a plurality of code statements in the engineering program. The ontology schema is generated by an analysis of the engineering program. The automation module 112 further causes the processing unit 202 to generate a sequential representation of the ontology schema, based on an analysis of the ontology schema.

The automation module 112 further causes the processing unit 202 to convert the sequential representation to the optimized sequential representation by application of a machine learning algorithm on the sequential representation. The machine learning algorithm is trained to convert the sequential representation to an optimized sequential representation of an optimized ontology schema. The machine learning algorithm is trained based on an analysis of a plurality of unoptimized engineering programs and a plurality of optimized engineering programs. The optimized ontology schema comprises information associated with a plurality of data and control flow interrelationships associated with the plurality of data items and metadata items associated with an optimized version of the engineering program.

The automation module 112 further causes the processing unit 202 to generate a plurality of differences between the sequential representation and the optimized sequential representation by comparing the sequential representation with the optimized sequential representation. The automation module 112 further causes the processing unit 202 to generate the optimized ontology schema from the ontology schema based on the determined plurality of differences between the sequential representation and the optimized sequential representation.

The automation module 112 further causes the processing unit 202 to map each of the determined plurality of differences to one or more code statements of the engineering program, based on an analysis of the ontology schema.

The automation module 112 further causes the processing unit 202 to generate the optimized engineering program from the engineering program, by modifying the determined one or more code statements of the engineering program. The modifications comprise any changes such as addition, deletion, update, replacement or revision of one or more variables, code lines, classes, functions, or comments in the one or more code statement. Since the engineering program is modified based on an analysis of the ontology schema, the one or more code statements are modified based on the relationships between the set of variables corresponding to the engineering program. In other words, the engineering program is optimized based on the ontology schema, to generate the optimized engineering program for the technical installation 106. Advantageously, code development time and labor required to optimize the engineering program to be compatible with the technical installation 106 is significantly reduced.

The automation module 112 further causes the processing unit 202 to receive a request to modify a code statement of the plurality of code statements of the engineering program. The request is at least one of a text-based user instruction, a voice-based user instruction, and a gesture-based user instruction. In one example, a user, such as a code developer may modify the code statement by entering one or more programming lines into the code statement of the engineering program, by use of an data input device such as a keyboard. The automation module 112 further causes the processing unit 202 to modify the code statement of the engineering program, based on the received request. The automation module 112 further causes the processing unit 202 to train the machine learning algorithm based on the modification of the code statement of the plurality of code statements of the engineering programs.

The automation module 112 further causes the processing unit 202 to generate a simulation instance for the optimized engineering program. In one example, the simulation instance is a digital twin of one or more engineering objects 108A-N in the technical installation 106.

The automation module 112 further causes the processing unit 202 to simulate execution of the generated engineering program by the one or more engineering objects of the technical installation 106 in a simulation environment by executing the engineering program on the generated simulation instance.

The automation module 112 further causes the processing unit 202 to determine that the generated engineering program is valid, based on a result of the simulated execution of the generated second set of programming blocks. The automation module 112 further causes the processing unit 202 to deploy the generated engineering program in real-time onto the one or more engineering objects 108A-N, based on a determination that the generated engineering program is valid. Advantageously, the generated engineering program is only deployed onto the one or more engineering objects 108A-N after the determination that the generated engineering program is valid. Further, the method comprises displaying, by the processing unit 202, the generated engineering program on a display device. Advantageously, the user is enabled to document the generated engineering program.

The storage unit 206 may be a non-transitory storage medium configured for storing a database (such as database 118) which comprises server version of a plurality of engineering programs.

The communication interface 208 is configured for establishing communication sessions between the one or more client devices 120A-N and the engineering system 102. The communication interface 208 allows the one or more engineering applications running on the client devices 120A-N to import/export engineering project files into the engineering system 102. In an embodiment, the communication interface 208 interacts with the interface at the one or more client devices 120A-N for allowing the engineers to access the engineering programs associated with an engineering project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processing unit 202, the accessible memory 204, and the input-output unit 210.

The network interface 212 may be configured to handle network connectivity, bandwidth and network traffic between the engineering system 102, client devices 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object behavior model generation module 304, an analysis module 306, a modifier module 308, an engineering object database 310, a validation module 312 and a deployment module 314. FIG. 3 is explained in conjunction with FIG. 1 and FIG. 2.

The request handler module 302 is configured for receiving the request to generate the engineering program associated with the industrial domain of the technical installation 106. For example, the request is received from one of the one or more users external to the industrial environment 100 via a network. In alternative embodiment, the request is received from the one or the one or more client devices 120A-N via the network. The request handler module 302 is further configured to determine the set of programming block associated with the industrial domain from the plurality of programming blocks associated with the set of industrial domains.

The object behavior model generation module 304 is configured for generating an ontology schema of a plurality of engineering programs in the memory 204. In a preferred embodiment, the generated ontology schema comprises information about relationships between a set of variables corresponding to each engineering program in the plurality of engineering programs. The set of variables comprises a plurality of data and pointer variables defined and used in the plurality of engineering programs. In one example, the ontology schema is a knowledge graph based representation of the plurality of engineering programs.

The analysis module 306 is configured for analyzing the ontology schema associated with the plurality of engineering programs. Specifically, the analysis module 306 is configured for retrieving data and control parameters associated with each programming block of the plurality of engineering programs. The data and control parameters are key performance indicators comprising information relating to the set of programming blocks associated with the industrial domain of the technical installation 106, for example, sensor data, actuator data, environment data, network data, any automation data and the like.

The modifier module 308 is configured for modifying one or more code statements of the plurality of engineering programs based on an outcome of analysis of the ontology schema. The one or more code statements is modified based on the analysis of the ontology schema. The modifications comprise any changes such as addition, deletion, update, replacement or revision of one or more variables, code lines, classes, functions, or comments in the set of programming blocks.

The engineering object database 310 is configured for generating an engineering object library comprising the generated engineering program, one or more engineering objects 108A-N, physical connections between the one or more engineering objects 108A-N, and a plurality of parameter values associated with the one or more engineering objects 108A-N and the physical connections. The engineering object database 310 is configured for continuously updating the engineering object library with updated versions of the engineering programs. Also, the engineering object database 310 is configured for maintaining the engineering object library in an ontology schema.

The validation module 312 is configured to generate a simulation instance for one or more engineering objects 108A-N of the technical installation 106. In one example, the simulation instance is a digital twin of the one or more engineering objects 108A-N. The validation module 312 is configured to simulate execution of the generated engineering program by the one or more engineering objects 108A-N of the technical installation 106 in a simulation environment by executing the set of programming blocks on the generated simulation instance. The validation module 312 is configured to determine that the generated engineering program is valid, based on a result of the simulated execution of the generated second set of programming blocks. Further, the validation module 312 is configured for simulating behavior of the set of programming blocks in the simulation environment by executing the set of programming blocks on the generated simulation instance. The simulation environment emulates an actual technical installation 106, such as technical installation 106. Further, the simulation environment may be a virtual setup of the actual technical installation 106. Also, the validation module 312 is configured for validating the behavior of the set of programming blocks based on results of simulation. The results of simulation may indicate success or failure of the engineering program or the set of programming block if deployed in the technical installation 106.

The deployment module 314 is configured for deploying the engineering program in real-time onto the one or more engineering objects 108A-N installed in the technical installation 106 based on the validation. Advantageously, the generated engineering program is only deployed onto the one or more engineering objects 108A-N after the determination that the generated engineering program is valid.

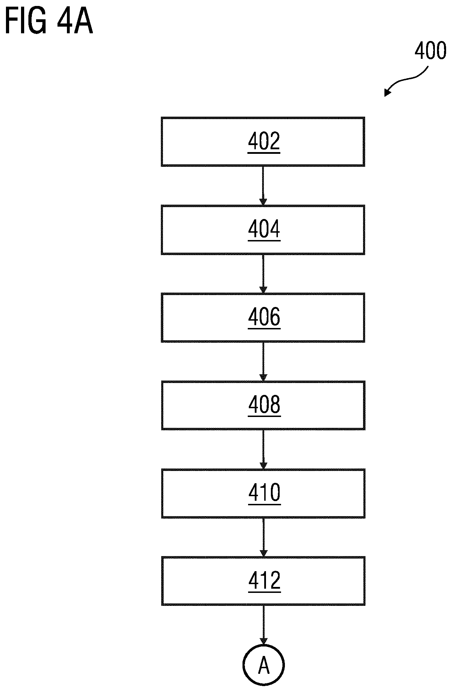

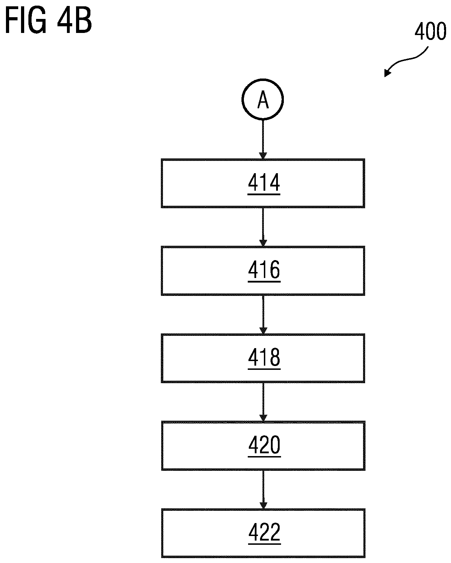

FIG 4A-B is a process flowchart illustrating an exemplary method 400 of generating engineering programs in an engineering system 102, according to an embodiment of the present invention.

At step 402, a request is received by the processing unit 202. The request is to generate a first engineering program, with a first specification from a second engineering program, with a second specification. The request comprises information about the first specification of the first engineering program. The first and second specification comprises information associated with coding languages, coding conventions, software configurations, processing speed restrictions, memory restrictions, and key process indicators associated with the first and second engineering program respectively. The first engineering program is requested to be generated for the technical installation 106. The second engineering program is stored in a memory storage device of the technical installation 106. In one example, the memory 204 is configured to store the second engineering program.

At step 404, the second engineering program is analyzed by the processing unit 202 by application of a natural language processing algorithm on the second engineering program having the second specification. Examples of the natural language processing algorithm includes but is not limited to Bayesian network algorithms and conditional random field algorithms. The natural language processing algorithm is applied on the second engineering program to extract a plurality of code statements from the second engineering program. The plurality of code statements may be coded in the second engineering program as at least one of a machine readable instruction written in a natural language, a high level programming language, an assembly language, or compiled code. The plurality of code statements comprises a plurality of data items and a plurality of metadata items associated with the second engineering program. The plurality of data items comprises a plurality of variables, a plurality of functions, and a plurality of code statements of the second engineering program. The plurality of metadata items comprises date of creation, author name, domain of an industrial environment in which the second engineering program is deployed. Each of the plurality of data items and the plurality of meta data items of the second engineering program may have data and control flow interrelationships with other data items and meta data items of the second engineering program.

At step 406, the plurality of data items and the plurality of meta data items associated with the second engineering program is determined by the processing unit 202 based on the application of the natural language processing algorithm.

At step 408 a first ontology schema comprising information associated with the plurality of data flow and control flow interrelationships between the plurality of data items and the plurality of metadata items in the second engineering program is generated by the processing unit 202. The first ontology schema is generated by an analysis of the second engineering program. The first ontology schema further comprises information about relationships between a set of variables corresponding to each programming block in the second engineering program and the plurality of code statements in the second engineering program. The set of variables comprises a plurality of data and pointer variables defined and used in the second engineering program. The first ontology schema is an abstraction of a programming domain that captures semantics of a plurality of programming concepts such as class hierarchy, command lines, data variables, and data structures of the set of programming blocks and one or more relationships amongst a plurality of programming concepts and a plurality of the program attributes like class hierarchy, member variables declared, data types of the variables, memory segments used, system functions and resources used, links to other industrial domain objects, and the like of the second engineering program. In one example, the first ontology schema is realized as a knowledge graph. In such a case, the knowledge graph is obtained by applying a parser on the second engineering program and thereby capturing the plurality of data flow and the plurality of control flow interrelationships between the plurality of data items and the plurality of metadata items.

At step 410, a first sequential representation of the first ontology schema is generated by the processing unit 202 based on an analysis of the first ontology schema. To generate the first sequential representation, a plurality of nodes of the knowledge graph of the first ontology schema are serialized by the processing unit 202. In one example, the first sequential representation is a natural language sentence which comprises information represented by the first ontological schema. In another example, the first sequential representation is a Javascript Object Notion (JSON) based representation of the first ontological schema.

At step 412, a machine learning model is trained by the processing unit 202 to convert the first sequential representation of the first ontological schema to a second sequential representation of a second ontological schema associated with the first engineering program. The second ontology schema comprises information associated with a plurality of data flow and control flow interrelationships of the first engineering program with the first specification. The machine learning model is trained based on an analysis of a plurality of engineering programs. In one example, the plurality of engineering programs may include an unoptimized version and an optimized version of an engineering program. In such a case, the machine learning model is trained on the unoptimized version and the optimized version of the engineering program such that the machine learning model is trained to convert a sequential representation of the unoptimized version of the engineering program to a sequential representation of the optimized version of the engineering program. In another example, the plurality of engineering program comprises at least two engineering programs which are identical in functionality, but differ in a coding parameter such as a coding language, a code length, or a coding convention. In such a case, the machine learning model is trained to convert a sequential representation of an engineering program with a first coding parameter to a sequential representation of an engineering program with a second coding parameter.

At step 414, the first sequential representation is converted by the processing unit 202 to the second sequential representation by application of the machine learning algorithm on the first sequential representation.

At step 416, a plurality of differences between the first sequential representation and the second sequential representation is determined by the processing unit 202 by comparing the first sequential representation and the second sequential representation.

At step 418, the second ontology schema is generated by the processing unit 202 from the first ontology schema based on the determined plurality of differences between the first sequential representation and the second sequential representation.

At step 420, each of the determined plurality of differences between the first sequential representation and the second sequential representation, is mapped by the processing unit 202 to one or more code statements of the plurality of code statements of the second engineering program, based on an analysis of the first ontology schema.

At step 422, the first engineering program from the second engineering program, is generated by the processing unit 202 by modifying the determined one or more code statements of the second engineering program. The modifications comprise any changes such as addition, deletion, update, replacement or revision of one or more variables, code lines, classes, functions, or comments in the one or more code statement. Since the second engineering program is modified based on an analysis of the first ontology schema, the one or more code statements are modified based on the relationships between the set of variables corresponding to the second engineering program.

Advantageously, code development time and labor required to generate the first engineering program for the technical installation 106 is significantly reduced. In one example, the first engineering program is an optimized version of the second engineering program. Advantageously, time and labor required to optimize the second engineering program for the technical installation 106 is significantly reduced.

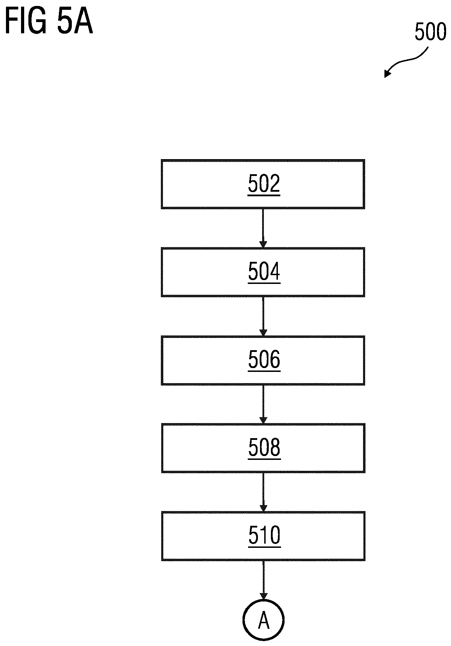

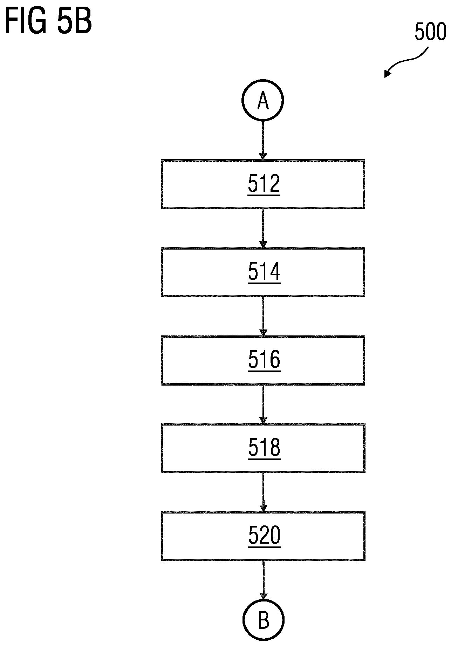

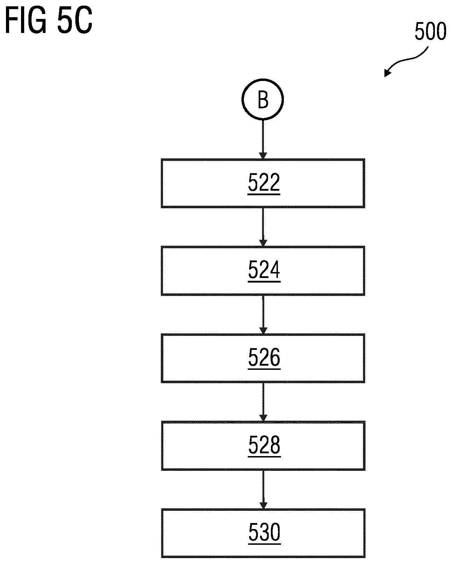

FIG 5A-C is a process flowchart illustrating an exemplary method 500 of optimizing engineering programs in an engineering system 102, according to an embodiment of the present invention.

At step 502, a request to optimize an engineering program is received by the processing unit 202. The request comprises information about one or more parameters of the engineering program, which is to be optimized. The one or more parameters comprises a coding language, a coding convention, a software configuration, a code size, a memory requirement, a processing power requirement, and a key performance indicator associated with the engineering program. In one example, the received request is to optimize the code length of the engineering program. The engineering program is requested to be optimized for the technical installation 106. The engineering program is stored in a memory storage device of the technical installation 106. The engineering program comprises a plurality of code statements which are coded as at least one of a machine readable instruction written in a natural language, a high level programming language, an assembly language, or compiled code.

At step 504, the engineering program is analyzed by the processing unit 202 by application of a natural language processing algorithm on the unoptimized engineering program. Examples of the natural language processing algorithm includes but is not limited to Bayesian network algorithms and conditional random field algorithms.

At 506, a plurality of data items and a plurality of meta data items associated with the engineering program is determined by the processing unit 202 based on the application of the natural language processing algorithm. The plurality of data items comprises a plurality of variables, a plurality of functions, and a plurality of code statements of the engineering program. The plurality of metadata items comprises date of creation, author name, domain of an industrial environment in which the second engineering program is deployed. Each of the plurality of data items and the plurality of meta data items of the second engineering program may have data and control flow interrelationships with other data items and meta data items of the engineering program.

At step 508, an ontology schema is determined by the processing unit 202. The ontology schema comprises information associated with a plurality of data flow and control flow interrelationships between a plurality of code statements in the engineering program. The ontology schema is generated by an analysis of the engineering program. The automation module 112 further causes the processing unit 202 to generate a sequential representation of the ontology schema, based on an analysis of the ontology schema.

At step 510, the sequential representation to the optimized sequential representation is generated by the processing unit 202 by application of a machine learning algorithm on the sequential representation. The machine learning algorithm is trained to convert the sequential representation to an optimized sequential representation of an optimized ontology schema. The machine learning algorithm is trained based on an analysis of a plurality of unoptimized engineering programs and a plurality of optimized engineering programs. The optimized ontology schema comprises information associated with a plurality of data and control flow interrelationships associated with the plurality of data items and metadata items associated with an optimized version of the engineering program.

At step 512, a plurality of differences between the sequential representation and the optimized sequential representation by comparing the sequential representation with the optimized sequential representation is generated by the processing unit 202.

At step 514, the optimized ontology schema is generated by the processing unit 202 from the ontology schema based on the determined plurality of differences between the sequential representation and the optimized sequential representation. At step 516, each of the determined plurality of differences is mapped by the processing unit 202 to one or more code statements of the engineering program, based on an analysis of the ontology schema.

At step 518, the optimized engineering program is generated by the processing unit 202 from the engineering program, by modifying the determined one or more code statements of the engineering program. The modifications comprise any changes such as addition, deletion, update, replacement or revision of one or more variables, code lines, classes, functions, or comments in the one or more code statement. Since the engineering program is modified based on an analysis of the ontology schema, the one or more code statements are modified based on the relationships between the set of variables corresponding to the engineering program. In other words, the engineering program is optimized based on the ontology schema, to generate the optimized engineering program for the technical installation 106. Advantageously, code development time and labor required to optimize the engineering program to be compatible with the technical installation 106 is significantly reduced.

At step 520, a request to modify a code statement of the plurality of code statements of the engineering program is received by the processing unit 202. The request is at least one of a text-based user instruction, a voice-based user instruction, and a gesture-based user instruction. In one example, a user, such as a code developer may modify the code statement by entering one or more programming lines into the code statement of the engineering program, by use of an data input device such as a keyboard. The automation module 112 further causes the processing unit 202 to modify the code statement of the engineering program, based on the received request.

At step 522, the machine learning algorithm is trained by the processing unit 202 based on the modification of the code statement of the plurality of code statements of the engineering program.

At step 524, a simulation instance for the optimized engineering program is generated by the processing unit 202. In one example, the simulation instance is a digital twin of one or more engineering objects 108A-N in the technical installation 106.

At step 526, execution of the generated engineering program by the one or more engineering objects of the technical installation 106 in a simulation environment is simulated by the processing unit 202 by executing the engineering program on the generated simulation instance.

At step 528, it is determined by the processing unit 202 that the generated engineering program is valid, based on a result of the simulated execution of the generated second set of programming blocks.

At step 530, the generated engineering program in real-time onto the one or more engineering objects is deployed by the processing unit 202 based on a determination that the generated engineering program is valid. Advantageously, the generated engineering program is only deployed onto the one or more engineering objects after the determination that the generated engineering program is valid. Further, the method comprises displaying, by the processing unit, the generated engineering program on a display device. Advantageously, the user is enabled to document the generated engineering program.

The present invention can take a form of a computer program product comprising program modules accessible from computer-usable or computer-readable medium storing program code for use by or in connection with one or more computers, processing units, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

## Claims

1. A method of generating an engineering program for a technical installation (106), the method comprising:
receiving, by a processing unit (202), a request to generate a first engineering program, with a first specification, from a second engineering program, with a second specification;
analyzing, by the processing unit (202), the second engineering program;
generating, by the processing unit (202), a first ontology schema comprising information associated with a plurality of data flow and control flow interrelationships between a plurality of code statements in the second engineering program, wherein the first ontology schema is generated by the analysis of the second engineering program;
generating, by the processing unit (202), a first sequential representation of the first ontology schema, based on an analysis of the first ontology schema;
generating, by the processing unit (202), a second ontology schema based on an application of a machine learning algorithm on the first sequential representation of the first ontology schema, wherein the second ontology schema comprises information associated with a plurality of data flow and control flow interrelationships of the first engineering program with the first specification; and
generating, by the processing unit (202), the first engineering program from the second engineering program, based on an analysis of the second ontology schema.

2. The method according to claim 1, wherein the machine learning algorithm is trained to convert the first sequential representation of the first ontology schema to a second sequential representation of the second ontology schema, and the machine learning algorithm is trained based on the analysis of a plurality of engineering programs.

3. The method according to claims 1 and 2, wherein generation of the second ontology schema based on the application of the machine learning algorithm on the first sequential representation of the first ontology schema comprises:
converting, by the processing unit (202), the first sequential representation to the second sequential representation by application of the machine learning algorithm on the first sequential representation;
determining, by the processing unit (202), a plurality of differences between the first sequential representation and the second sequential representation by comparing the first sequential representation and the second sequential representation; and
generating, by the processing unit (202), the second ontology schema from the first ontology schema based on the determined plurality of differences between the first sequential representation and the second sequential representation.

4. The method according to claim 3, wherein the generation of the second ontology schema from the first ontology schema based on the determined plurality of differences between the first sequential representation and the second sequential representation comprises:
mapping, by the processing unit (202), each of the determined plurality of differences between the first sequential representation and the second sequential representation, to one or more code statements of the plurality of code statements of the second engineering program, based on an analysis of the first ontology schema; and
generating, by the processing unit (202), the first engineering program from the second engineering program, by modifying the determined one or more code statements of the second engineering program.

5. The method according to claim 1, wherein the first engineering program is an optimized version of the second engineering program.

6. A method of optimizing an engineering program, the method comprising:
receiving, by a processing unit (202), a request to optimize an engineering program;
analyzing, by the processing unit (202), the engineering program;
generating, by the processing unit (202), an ontology schema comprising information associated with a plurality of data flow and control flow interrelationships between a plurality of code statements in the engineering program, wherein the ontology schema is generated by the analysis of the engineering program;
generating, by the processing unit (202), a sequential representation of the ontology schema, based on an analysis of the ontology schema;
generating, by the processing unit (202), an optimized ontology schema based on an application of a machine learning algorithm on the sequential representation of the ontology schema, wherein the optimized ontology schema comprises information associated with a plurality of data flow and control flow interrelationships of an optimized engineering program; and
generating, by the processing unit (202), the optimized engineering program from the engineering program, based on an analysis of the optimized ontology schema.

7. The method according to claim 1, wherein the machine learning algorithm is trained to convert the sequential representation to an optimized sequential representation of the optimized ontology schema, and the machine learning algorithm is trained based on an analysis of a plurality of unoptimized engineering programs and a plurality of optimized engineering programs.

8. The method according to claims 6 and 7, wherein generation of the optimized ontology schema based on the application of the machine learning algorithm on the sequential representation of the ontology schema comprises:
converting, by the processing unit (202), the sequential representation to the optimized sequential representation by application of the machine learning algorithm on the sequential representation;
determining, by the processing unit (202), a plurality of differences between the sequential representation and the optimized sequential representation by comparing the sequential representation with the optimized sequential representation; and
generating, by the processing unit (202), the optimized ontology schema from the ontology schema based on the determined plurality of differences between the sequential representation and the optimized sequential representation.

9. The method according to claims 6 to 8, wherein the generation of the optimized ontology schema from the ontology schema based on the determined plurality of differences between the sequential representation and the optimized sequential representation comprises:
mapping, by the processing unit (202), each of the determined plurality of differences to one or more code statements of the engineering program, based on an analysis of the ontology schema; and
generating, by the processing unit (202), the optimized engineering program from the engineering program, by modifying the determined one or more code statements of the engineering program.

10. The method of claim 9, further comprising:
receiving, by the processing unit (202), a request to modify a code statement of the plurality of code statements of the engineering program;
modifying, by the processing unit (202), the code statement of the engineering program, based on the received request; and
training, by the processing unit (202), the machine learning algorithm based on the modification of the code statement of the plurality of code statements of the engineering programs.

11. The method according to claim 6 to 10, further comprising:
generating, by the processing unit (202), a simulation instance for the optimized engineering program; and
simulating, by the processing unit (202), execution of the generated optimized engineering program by one or more engineering objects (108A-N) of a technical installation (106) in a simulation environment by executing the optimized engineering program.

12. The method according to claims 11, further comprising:
determining, by the processing unit (202), whether the optimized engineering program is valid, based on a result of the simulated execution;
deploying, by the processing unit (202), the optimized engineering program in real-time onto the one or more engineering objects (108A-N), based on a determination that the generated engineering program is valid; and
displaying, by the processing unit, the generated engineering program on a display device.

13. An engineering system for generating and optimizing an engineering program for a technical installation (106), wherein the engineering system comprises:
one or more processing unit(s) (202); and
a memory (204) coupled to the one or more processing unit(s), wherein the memory comprises an automation module stored in the form of machine-readable instructions executable by the one or more processing unit(s), wherein the automation module (112) is capable of performing a method according to any of the claims 1-12.

14. An industrial environment (100) comprising:
an engineering system (102) as claimed in claim 13;
a technical installation (106) comprising one or more physical components; and
one or more client devices (120A-N) communicatively coupled to the engineering system (102) via a network (104), wherein the engineering system (102) is configured to perform a method according to any of the claims 1 to 12.

15. A computer-program product, having machine-readable instructions stored therein, that when executed by a processing unit(s) (202), cause the processing units to perform a method according to any of the claims 1-12.
